## Europäisches Patentamt
## European Patent Office
## Office européen des brevets

(19)

(11) Publication number: **0 059 621**
**A2**

# EUROPEAN PATENT APPLICATION

(21) Application number: **82300996.4**

(22) Date of filing: **26.02.82**

(51) Int. Cl.³: **B 60 G 17/04**
**F 16 F 9/08**

(30) Priority: **27.02.81 GB 8106272**

(43) Date of publication of application:
**08.09.82 Bulletin 82/36**

(84) Designated Contracting States:
**BE DE FR GB IT**

(71) Applicant: **ARMSTRONG PATENTS CO. LIMITED**
**Gibson Lane Melton**
**North Ferriby North Humberside, HU14 3HY(GB)**

(72) Inventor: **Poyser, John**
**10 Landsdown Way**
**Haxby York(GB)**

(74) Representative: **Stringer, David Hiram et al,**
**W.P. THOMPSON & CO Coopers Building Church Street**
**Liverpool L1 3AB(GB)**

(54) Improvements relating to hydropneumatic suspension units.

(57) The present specification relates to a telescopic hydropneumatic suspension unit comprising a body member (10) connectible to one of the sprung or unsprung masses of a vehicle and provided with an internal hydraulic cylinder (12) wherein a piston (14) is reciprocable, a piston rod (16) connected to the piston (14) being connectible to the other of said masses. Flexible diaphragm means (36,38,D) co-operate with the body member (10) and said hydraulic cylinder (12) to define hydraulic chamber (40,44) respectively in communication with the hydraulic cylinder spaces (52,54) in front of and behind said piston (14), and a pneumatic chamber (42,46) contiguous with each hydraulic chamber (40,44). The end of the piston rod (16) within the hydraulic cylinder (12) is axially bored to act as a pump chamber (62) which engages over an axially apertured pump rod (64) which is axially secured within the cylinder (12), and which communicates with said hydraulic chambers (40,44) through suitably arranged pump inlet (&2) and delivery valves (68,70). Thus relative axial movement between the hydraulic piston rod (16) and the pump rod (64) is effective to transfer fluid from one hydraulic chamber (40,44) to another, with consequent effect upon the axial position of the hydraulic piston (14) in its cylinder (12). With known suspension units of this type accurate machining of virtually all of the respective pump parts, is required and certain complex components are used, the construction being therefore expensive to manufacture.

The present invention seeks to overcome the above disadvantages by avoiding unnecessary and unnecessarily complex components and by eliminating close manufacturing tolerances in some major components. The present invention provides a fluid flow passage in the form of a groove (80) in the outer surface of the pump rod (64). The groove (80) communicates with the pump chamber (62) in the hydraulic piston rod (16) and co-operates at one end with a pump rod seal (76) carried by the hydraulic piston (14) or its piston rod (16), to permit fluid transfer to the pump chamber (62) from the high pressure end (52) of the hydraulic cylinder in front of the hydraulic piston (14) whenever said pump rod seal (76) is moved by the hydraulic piston (14) to a position wherein said end of groove (80) is opened to said high pressure end (52) of the hydraulic cylinder (12). Co-operation between the groove (80) and the pump rod seal (76) provides a very simple and reliable means of sensing or detecting the axial position of the piston (14) within cylinder (12) and of maintaining the piston (14) substantially in that position by balancing the rates of fluid flow to and from the high pressure end (52) of the cylinder (12).

./...

EP 0 059 621 A2

Croydon Printing Company Ltd

FIG.1

-1-

DESCRIPTION

## "IMPROVEMENTS RELATING TO HYDROPNEUMATIC SUSPENSION UNITS".

This invention concerns hydropneumatic suspension units and relates especially to such units for use in vehicle suspension systems.

In general, in a hydropneumatic suspension unit, the load exerted on a volume of hydraulic medium by a piston displaceable responsive to movement of a mass supported thereby is balanced by a pressurised gaseous medium against which the hydraulic medium acts, the gaseous medium thus constituting a pneumatic suspension spring. For application to vehicle wheel suspensions, such units are desirably of a telescopic construction and include levelling means for maintaining the vehicle at a mean riding height irrespective of the changing ride conditions which the vehicle may experience from time to time. In one type of vehicle telescopic hydropneumatic suspension unit, hereinafter referred to as being a suspension unit of the type described, the unit comprises a body member connectible to one of the sprung or unsprung masses of a vehicle and provided with an internal hydraulic cylinder wherein is reciprocable a piston having a piston rod connectible to the other of said masses, flexible diaphragm means co-operating with the body member and the hydraulic cylinder to define hydraulic chambers respectively in communication with the hydraulic cylinder spaces in front of and behind said piston, and a pneumatic chamber contiguous with each hydraulic chamber, and the end of the piston rod within the hydraulic cylinder is axially bored to act as a pump chamber and engages over an axially apertured pump rod secured axially in said cylinder and communicating with said hydraulic chambers through suitably arranged pump inlet and delivery valves, whereby relative axial movement between the hydraulic piston rod and the pump rod is effective to transfer hydraulic fluid from one hydraulic chamber to another, with consequent effect upon the axial position of the hydraulic piston in its cylinder.

British Patent Specification Nos. 933,358 and 1,194,243 each disclose hydropneumatic suspension units of the type to which the present invention relates. However, as these prior constructions require the accurate machining of virtually all their respective pump parts, and certain complex components are utilised, the construction is expensive to manufacture.

The present invention seeks to provide a hydropneumatic suspension unit of the type described which is economic in manufacture, both by avoiding unnecessary and unnecessarily complex components and by eliminating close manufacturing tolerances in some major components; and which by reason of the simplifications thus achieved, is reliable and durable in service.

According to one feature of the present invention, in hydropneumatic suspension units of the type described, a fluid flow passage is arranged externally of the pump rod to communicate with the pump chamber in the hydraulic piston rod and co-operates at one end with a pump rod seal carried by said hydraulic piston or its piston rod to permit fluid transfer to the pump chamber from the high pressure end of the hydraulic cylinder in front of the hydraulic piston whenever said pump rod seal is moved by the hydraulic piston to a position wherein said end of said fluid flow passage is opened to said high pressure end of said hydraulic cylinder.

The fluid flow passage is preferably a groove, which may be an axially directed or a helical groove, formed externally in the pump rod and, by its co-operation with the pump rod seal, provides a very simple and reliable means of sensing or detecting the axial position of the hydraulic piston within its cylinder and of maintaining the piston substantially in that position by balancing the rate of fluid delivery to the high pressure cylinder space in front of the hydraulic piston by the pump against the rate of fluid transfer from that high pressure space through the groove to the lower pressure cylinder space behind the piston. Although, for this purpose, the fluid flow passage may have a constant cross-sectional shape, that shape may be varied along the length of the passage in order to vary the rate of fluid transfer between the high and low pressure cylinder spaces according to the axial position of the hydraulic piston, thus enabling the movement of that piston towards and away from its mean position in the hydraulic cylinder to be predetermined and controlled as desired.

According to another feature of the invention, however, the hydraulic piston and/or its piston rod may be provided behind the piston with valve controlled port means by which the low pressure cylinder space behind the piston is enabled to communicate with the pump chamber, the control valve of said port means then not only acting as a pump inlet valve but also co-operating with the fluid passage means in the pump piston to affect the axial position of the hydraulic piston in its cylinder. Thus, by appropriately balancing the rate of fluid transfer permitted by the fluid passage means and by said control valve against the pump delivery rate to the high pressure space in the hydraulic cylinder, the hydraulic piston may as a nett result be caused to move outwardly of its cylinder to extend the length of the suspension unit to compensate for or to control current vehicle riding conditions.

Preferably, the hydraulic cylinder is mounted in an outer body member and an annular space between the two is divided by a separator member into a pair of adjoining compartments, each of which in turn is divided into a hydraulic chamber circumscribing the hydraulic pressure cylinder and a continuous pneumatic chamber, the latter division in each case being by the aforementioned flexible diaphragm means. If desired the function of one or both pneumatic chambers may be performed by external accumulators connected hydraulically.

The invention will be described further, by way of example, with reference to the accompanying drawings, in which:-

Fig.1 is an axial sectional view of part of a hydropneumatic suspension unit embodying the present invention, non-essential parts being omitted for clarity;

Fig.2 is an enlarged axial section through part of a modified piston for use in the embodiment of Fig.1;

Fig.3 is an enlarged axial section through part of a modified pump rod for use in the embodiment of Fig.1; and

Fig.4 is a partial axial section illustrating a modified form of hydropneumatic suspension unit to which the present invention can be applied.

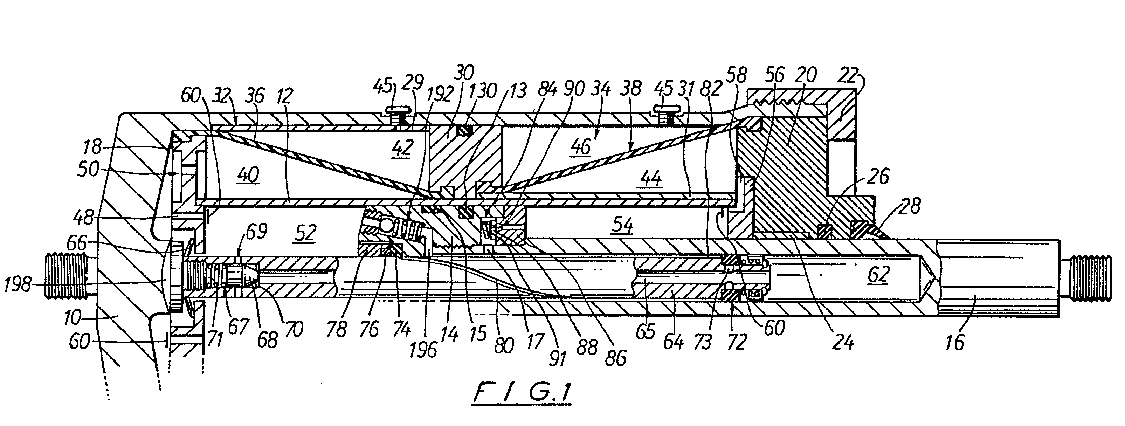

In the suspension unit shown in Fig.1 of the drawings, a hydraulic piston 14 carried at one end of a piston rod 16 is axially displaceable within a hydraulic cylinder 12 which is arranged coaxially within a cylindrical body member 10. The hydraulic cylinder 12 is mounted between an end closure plate 18 seated at the end of the body member in front of the piston 14 and a piston rod guide member 20 closing the opposite end of the body member 10, the latter being externally threaded to receive a flanged retainer nut 22 by which the hydraulic cylinder is clamped between the rod guide 20 and the end closure plate 18. The end of the piston rod remote from the piston 14 extends out of the body member 10 through the guide member 20, which carries a rod bearing 24 together with a fluid seal 26 and a dirt excluding seal 28. The illustrated suspension unit being intended for use in a vehicle wheel suspension system, the end region of the body member 10 adjacent the closure plate 18 is adapted in any convenient conventional manner for connection to a vehicle frame while the free end of the piston rod 16 is similarly adapted for connection to a vehicle wheel mounting.

Intermediate the ends of the hydraulic cylinder 12 there is located a separator member 30 which divides the annular space defined between the cylinder 12 and the body member 10 into a pair of adjoining compartments 32 and 34. The axial position of the separator 30 relative to cylinder 12 is determined by a cylindrical spacer 29 fitted within the inner end of the body member 10 and a similar spacer 31 seated over the rear end region of the hydraulic cylinder 12. A first frusto-conical, flexible diaphragm 36 clamped at one end between the body member 10 and the end closure plate 18 then further divides the compartment 32 into a hydraulic chamber 40 and a contiguous pneumatic chamber 42. A second and similar flexible diaphragm 38 divides the compartment 34 into a hydraulic chamber 44 and a contiguous pneumatic chamber 46, the inner ends of both diaphragms being clamped between the separator 30 and the hydraulic cylinder 12 and the outer end of the diaphragm 38 being clamped between the body member 10 and the piston rod guide 20. A seal 130 located in the separator 30 ensures isolation of gas in chamber 42 from gas in chamber 46. The diaphragms are conveniently made of an elastomeric material such as a natural or synthetic rubber.

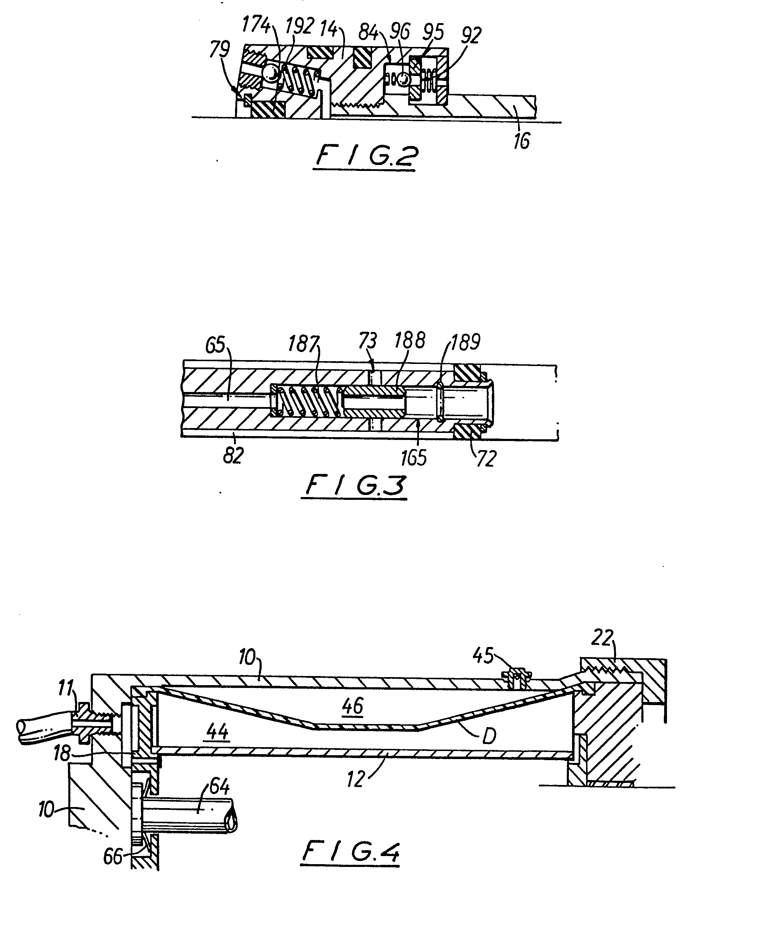

In an alternative construction shown in Fig.4, the space between the hydraulic cylinder 12 and the body member 10 is solely one chamber divided by a single diaphragm D. The space adjacent the hydraulic cylinder 12 equates to chamber 44 in Fig.1 and the space between the diaphragm and the body member 10 equates to chamber 46 in Fig.1. An external accumulator (not shown) is connected hydraulically to perform the function of chamber 32 of Fig.1.

Referring back to Fig.1 it will be noted that the end closure plate 18 is formed with radially spaced ports 48 and 50 by means of which the hydraulic cylinder space 52 in front of piston 14 is enabled to communicate with the hydraulic chamber 40. The cylinder space 54 behind the piston communicates with the hydraulic chamber 44 through passageways 58 formed in locator piece 56 which is seated in an axial recess in the inner end face of the piston rod guide 20 and which serves to locate both the piston rod bearing 24, and possibly the seal 26, and the adjoining end of the hydraulic cylinder 12. Communication between spaces 40 and 52 and between 44 and 54 may alternatively be effected by holes or slots in the cylinder 12 close to or at the end. Effective separation of spaces 52 and 54 is achieved by seal 13 on the piston 14, a support ring 15 can also be included.

If desired, a pressure blow-off valve (not shown) can be arranged in the piston 14 to vent transient excess pressures from the high pressure cylinder space 52 through the piston 14 and by way of valve chamber 84 to the low pressure cylinder space 54.

If the unit is to perform suspension damping functions, the ports 48 and 58 may be controlled by suitable damper valves which are diagrammatically indicated as being plate valves 60.

The piston rod 16 is axially bored to provide a pump chamber 62, into which extends a similarly bored pump rod 64 having its end external to the pump chamber flanged and secured by means of a conical spring washer 66 in an axial recess formed in the outer face of the closure plate 18. Alternatively, a suitable recess can be provided in the body member 10. The flange on the pump rod 64 is provided by a separate part, fixed to the rod by a thread or similar means. Alternatively the flange can be an integral part of the pump rod 64. The flanged end of the pump rod is counterbored as at 67 to form valve seat 70 and receive a pump delivery valve member 68 which co-operates with valve seat 70, and a spring 71. The inner end of the pump rod is stepped to provide a seat for a piston ring 72, the latter being spring-loaded onto its seat to enable it to act as a pump inlet valve in conjunction with ports 73 in the pump rod 64.

It may in some cases be advantageous to taper a part of the bore constituting the pump chamber 62 so that the effectiveness of the pump is determined by the degree of taper and the axial position of the piston 72 within the tapered bore.

An alternative construction for the pump inlet valve is shown in Fig.3. In this alternative construction the free inner end of the pump rod 64 is of reduced diameter to receive a fixed pump piston ring 72 while within the counterbore 165 is arranged a cylindrical valve spool 188, movement of valve spool 188 towards the open end of counterbore 165 being limited by a circular spring clip 189. The valve spool 188, which is itself of a very simple construction, acts in a simple manner to control the pumping action of the pump rod 64, in that, during an outward stroke of the suspension unit piston rod 16 resulting in an expansion of the pump chamber 62, hydraulic fluid is drawn into the latter from the annulus 82 through the ports 73 the spool 188 being at this instant urged against the spring clip 189 and uncovering the ports 73, and through the hollow interior of the valve spool 188. During an inward stroke of the piston rod 16, however, when the volume of chamber 62 is decreased, hydraulic fluid forced through the hollow interior of the valve spool 188 in the opposite direction creates differential pressure across the valve spool 188 and displaces the latter in the counterbore 165 against the action of the spring 187 to close the ports 73, so that hydraulic fluid is forced along the pump rod bore 65 to the pump delivery valve at the end of the pump rod remote from chamber 62.

Referring back to the arrangement of Fig.1, the free axial end face of the hydraulic piston 14 is recessed to receive a bearing 74 for the pump rod 64, and the bearing 74 together with a radially inwardly directed pump rod seal 76 are clamped to the hydraulic piston 14 by a ring nut 78. If desired, the bearing 74 and seal 76 can alternatively be of a composite, unitary construction as shown at 174 in Fig.2 and located by a circlip 79 or similar retainer.

It will be noted that both the mounting of the pump rod 64 by means of the spring washer 66 in the closure plate 18 and the mounting of the pump piston ring 72 on the stepped inner end of the rod 64 enable the latter to be self-centering in the pump chamber 62, the spherical seat 198 allowing for angular misalignment, thus avoiding the need for close manufacturing tolerances in any of these components or in the mounting of the hydraulic piston rod 16. For similar reasons, although the hydraulic piston 14 is shown as being fixed to the piston

rod 16, it may alternatively be mounted thereon to have a degree of freedom in movement in a diametric direction if desired.

The exterior of the pump rod 64 is formed with a groove 80 which extends from a position intermediate the pump rod ends to terminate adjacent the stepped end carrying the pump piston ring 72. The groove 80 increases gradually in depth in a direction towards the stepped end of the pump rod 64 and although it is illustrated as being of helical shape, it may alternatively be an axial parallel groove. The groove 80 serves to place the hydraulic cylinder space 52 in communication with the annulus 82 in the pump chamber around the pump rod in dependence upon the axial position of the hydraulic piston rod 16 relative to the hydraulic cylinder 12, that communication first being permitted when the leading end of the groove is uncovered by the pump rod seal 76 and the permitted rate of fluid transfer to the annulus 82 increasing as the seal moves along the groove.

The rear axial end face of the hydraulic piston 14 is formed with a valve chamber 84 which enables fluid to pass via a ported valve seat member 86 to the hydraulic cylinder space 54 under the control valve member 88 resiliently urged against the valve seat 86 by closure spring 91. Fluid flow in the opposite direction, from the high pressure cylinder space 52 to the annulus 82 and thence back into the cylinder space 54 is controlled by bleed hole or holes 90 in the plate 88 or alternatively by notches (not shown) in the valve seat 86.

In use, pressurised gas, such as nitrogen, is admitted to the pneumatic chambers 42 and 46 through respective filling valves 45 whilst the hydraulic chambers 40 and 44 together with the hydraulic cylinder 12 and the pump assembly are filled with oil. In its installed position, as illustrated in Fig.1, the hydraulic

piston 14 is about midway in the cylinder 12 with the pump rod seal 76 just behind the beginning of the groove 80 which constitutes the level control position wherein the vehicle will be at normal riding height. Under these conditions, the unit will be taking some share of the suspension load due to the fluid pressure acting on an area equal to the cross-sectional area of the piston rod 16.

When the vehicle is in motion, the piston rod 16 will reciprocate within the hydraulic cylinder 12. As a result, whenever the pump rod 64 moves further into the pump chamber 62, the pump piston ring 72 is urged onto its seat by spring 75, oil in the chamber in front of the pump piston ring 72 is pressurised and passes down the axial bore 65 of the pump rod to unseat the delivery valve 68. From the delivery valve 68 via ports 69, the pressurised oil passes to the hydraulic cylinder space 52 in front of the hydraulic piston 14 and through the ports 48 and 50 in the end closure plate 18 to the hydraulic chamber 40. This displacement of fluid compresses the gas in the pneumatic chamber 42 and increases the oil pressure acting on the piston 14. During movements of the piston rod 15 in the opposite direction, the pump piston ring 72 lifts from its seat as the pressure in the pump chamber 62 falls and hydraulic fluid from the hydraulic chamber 44 and from the cylinder space 54 is drawn through the valve assembly 84 to 88 and passes by way of a radial port 17 in the piston rod 16 to the annulus 82 and thence through ports 73 to the pump chamber. As an alternative to the radial port 17, the piston rod 16 may be formed between the valve chamber 84 and a communication groove 196 with one or more axial grooves (not shown) communicating with the annulus 82. Hydraulic fluid also passes to the annulus 82 through the control groove 80 whenever this is exposed in front of the pump rod seal 76, the ratio of the fluid transfer rate from the two sources being governed by the position of the hydraulic piston 14 (which determines the exposed length of the groove 80), the prevailing pressure in the hydraulic cylinder space 52 in front of the piston, the velocity of the piston displacement and, when the pump chamber 62 is tapered, by the effectiveness of the pump piston ring 72 within the tapered pump chamber.

The parameters of the control groove 80, the control valve assembly 84 to 88, and the taper of the bore 62 are chosen such that, under expected normal conditions of vehicle load and of road surface, equilibrium is maintained in the fluid transfer from the pump to the hydraulic high pressure regions 40,52 and from the latter to the low pressure regions 44,54 and 62, the hydraulic piston 14 remaining, under such conditions, with the seal 76 positioned to just expose the leading end of the groove 80, which thus acts as a level sensing indicator. If the load being carried by the vehicle exceeds the expected normal value, the hydraulic piston 14 moves further into the cylinder 12 so that the leading end of the groove 80 is covered. The pump, however, continues to pump fluid into the high pressure chamber 40 and the cylinder space 52, until the resulting pressure increase again causes the piston 14 to move outwardly in its cylinder to the point where the leading end of the groove 80 is once more uncovered and equilibrium, albeit at a higher pressure, is re-established.

When the vehicle is travelling over rough roads or terrain, the rapidity of movement of the piston rod 16 causes the pump to transfer fluid to the high pressure chamber 40 and cylinder space 52 at a faster rate than the control groove 80 is capable of transferring fluid to the annulus 82. The volume of fluid present in the cylinder space thus increases and gives rise to a corresponding increase in the prevailing riding height of the vehicle, the increase in riding height being determined by the speed at which the vehicle is being driven.

The fluid transfer rates which the seal 76 and the control groove 80 are required to handle can, of course, be changed in discrete steps by changing the parameters of the control valve assembly 84 to 88 and the taper of the bore 62, and for this reason, the fluid control valve assembly in each suspension unit is provided to meet the individual service requirement expected of the vehicle to which the unit is to be fitted. Although in the embodiment illustrated in Fig.1, the control valve is shown as having a plate valve member 88, it may alternatively be of ball valve (see Fig.2) or other construction. Again, a spring-loaded seat 95 may be substituted for the fixed seat 86 (see Fig.2) the spring load being determined to control the rate of fluid flow in conjunction with the control groove 80 and any taper which may be provided in the pump chamber 62. The valve seat 95 is held onto a seat formed by abutment shoulders on the piston 14 and piston rod 16, by a spring 95'. A ball valve 96 held onto the seat 95 by another spring 96' performs the function of the pump inlet valve. The forces exerted by the springs 95',96' are balanced in such a way that the valve seat 95 will only lift from its seat when the pressure in chamber 84 exceeds the pressure in cylinder space 54 by a predetermined value.

## CLAIMS

1. A telescopic hydropneumatic suspension unit comprising a body member (10) connectible to one of the sprung or unsprung masses of a vehicle and provided with an internal hydraulic cylinder (12) wherein a piston (14) is reciprocable, a piston rod (16) connected to the piston (14) being connectible to the other of said masses, flexible diaphragm means (36,38,D) co-operating with the body member (10) and said hydraulic cylinder (12) to define hydraulic chambers (40,44) respectively in communication with the hydraulic cylinder spaces (52,54) in front of and behind said piston (14), and a pneumatic chamber (42,44) contiguous with each hydraulic chamber (40,44), the end of the piston rod (16) within the hydraulic cylinder (12) being axailly bored to act as a pump chamber (62) which engages over an axially apertured pump rod (64) secured axially in the cylinder (12) and which communicates with said hydraulic chambers (40,44) through suitably arranged pump inlet (72) and delivery valves (68,70), whereby relative axial movement between the hydraulic piston rod (16) and the pump rod (64) is effective to transfer fluid from one hydraulic chamber (40,44) to another, with consequent effect upon the axial position of the hydraulic piston (14) in its cylinder (12), characterised in that a fluid flow passage (80) is arranged externally of the pump rod (64), said fluid passage (80) co-operating at one end with a pump rod seal (76) carried by said hydraulic piston (14) or its piston rod (16), to permit fluid transfer to the pump chamber (62) from the high pressure end (52) of the hydraulic cylinder (12) in front of the hydraulic piston (14) whenever said pump rod seal (76) is moved by the hydraulic piston (12) to a position wherein said end of said fluid flow passage (80) is

-14-

opened to said high pressure end (52) of said hydraulic
cylinder (12).

2. A suspension unit as claimed in claim 1, in
which said fluid flow passage (80) is helical.

3. A suspension unit as claimed in claim 1, in
which said fluid flow passage (80) is a straight path.

4. A suspension unit as claimed in any of claims
1 to 3, in which the transverse cross section of the
fluid flow passage (80) varies along the length of the
fluid flow passage.

5. A suspension unit as claimed in any one of
claims 1 to 4, in which the fluid flow passage (80) is
formed as a groove in the outer surface of the pump rod
(64).

6. A suspension unit as claimed in any one of
the preceding claims, in which said pump rod (64)
carries a piston (72), and a sleeve valve (187,188,73)
is arranged within the axially extending bore (65) in
the pump rod (64).

7. A suspension unit as claimed in any one of
the preceding claims, in which a spring loaded ball
valve (192) is incorporated in the piston (14), the
ball valve (192) bypassing the pump rod seal (76,174).

8. A suspension unit as claimed in any one of
the preceding claims, in which one of the said
hydraulic chambers (40) and the associated pneumatic
chamber (42), are arranged externally of the unit, and
connected thereto by suitable passage means (11).

9. A suspension unit as claimed in any one of
the preceding claims, in which valves (60) are provided
to control the fluid flow between the hydraulic cylinder
spaces (52,54) and the said hydraulic chambers (40,44).

10. A suspension unit as claimed in any one of
the preceding claims, in which a delivery valve (68,
70) is provided at the fixed end of the axially apertured
pump rod (64).

11.  A suspension unit as claimed in any one of the preceding claims, in which the pump rod (64) is secured axially within the cylinder (12) but is allowed to move slightly to align itself within the hollow piston rod (16).

12.  A suspension unit as claimed in any one of the preceding claims, in which valve controlled port means (17,84,86,88,91) are provided in the hydraulic piston (14) and the piston rod (16), by means of which the cylinder space (54) behind the piston (14) can communicate with the pump chamber (62), said port means (17,84,86,88.91) including a valve (86,88) which opens to allow fluid to flow to the pump chamber (62), and which closes but allows restricted flow in the reverse direction.

0059621

F I G. 1

*FIG.2*

*FIG.3*

*FIG.4*